## Europäisches Patentamt

## European Patent Office

## Office européen des brevets

(11) Veröffentlichungsnummer: **0 191 381**
**B1**

(12) # EUROPÄISCHE PATENTSCHRIFT

(45) Veröffentlichungstag der Patentschrift:
24.05.89

(51) Int. Cl.⁴: **F 16 J 15/10**

(21) Anmeldenummer: **86101264.9**

(22) Anmeldetag· **31.01.86**

(54) Profilstrang zum dichtenden Einfassen von Fenster- oder Türöffnungen in Kraftfahrzeugen und Gebäuden.

(30) Priorität: **14.02.85 DE 3505016**

(43) Veröffentlichungstag der Anmeldung:
**20.08.86 Patentblatt 86/34**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**DE-A- 2 127 097**
**DE-A- 2 339 899**
**GB-A- 2 109 042**

(73) Patentinhaber: **Continental Aktiengesellschaft,**
**Königsworther Platz 1, D-3000 Hannover 1 (DE)**

(72) Erfinder: **Hermann, Dietmar, Kantstrasse 7,**
**D-3008 Garbsen 6 (DE)**
Erfinder: **Walter, Siegfried, Wiebergstrasse 102,**
**D-3000 Hannover 81 (DE)**

## Beschreibung

Die Erfindung bezieht sich auf aus einer Mischung eines kautschukartigen Elastomeren mit in Teilbereichen ihres Querschnittsumfanges in haftender Bindung aufgebrachten und über ihre ganze Länge durchlaufenden Belagstreifen aus andersartigen Stoffen insbesondere aus fluorhaltigen Kunststoffen wie z.B. Polytetrafluoräthylen hergestellte Profilstränge zum dichtenden Einfassen von Fenster- oder Türöffnungen in Kraftfahrzeugen und Gebäuden.

Schiebefenster und andere mit Bewegungsmöglichkeit eingefasste Scheiben, Türplatten u.dgl. finden an den anliegenden Gummidichtprofilsträngen infolge derer natürlicherweise vorgegebenen Oberflächenbeschaffenheit einen unerwünscht hohen Gleitwiderstand. Es hat sich daher in der Praxis schon seit längerem eingebürgert, die Profilstränge zumindest in den reibend berührten Umfangsbereichen mit einem das Gleiten begünstigenden Oberflächenbelag auszustatten. Solche mit Gleitbelägen versehene Profilstreifen sind z.B. aus den Dokumenten GB-A-2 109 042 und DE-A-2 127 094 bekannt.

Nach einem nicht zum Stand der Technik gehörenden Verfahren (EP-A-0 154 121) wird ein Gleitbelag als vorgeformter dünner Streifen mit dem im noch unvulkanisierten Zustand befindlichen Profilstrang zusammengeführt und im Verlaufe der nachfolgenden Vulkanisierung in festhaftende Bindung mit diesem gebracht. Es gelang damit, selbst Belagstreifen aus sonst schwierig zu behandelnden Fluorkarbonen, wie etwa dem unter dem Handelsnamen Teflon bekannten Polytetrafluoräthylen, innig und auch dauerhaft mit dem Gummi der Profilstränge zu verbinden. Unter extremen Bedingungen, vor allem unter der Einwirkung sehr hoher oder sehr niedriger Aussentemperaturen in tropischen und arktischen Einsatzgebieten kam es trotzdem noch hin und wieder zu gelegentlichen Ablöseerscheinungen. Da andererseits aber gerade die fluorhaltigen Kunststoffe besonders gute Gleiteigenschaften aufweisen und die Beibehaltung solcher Belagstreifen schon aus diesem Grunde wünschenswert erschien, entstand als Aufgabe der Erfindung das Bestreben nach weiteren Verbesserungen der mit einem Verfahren gemäss der DE-A-3 405 973 erzielbaren Haftung.

Zum Lösen dieser Aufgabe setzt die Erfindung, ausgehend von Profilsträngen der eingangs geschilderten Gattung, an dem Mischungsaufbau des Elastomers an. Es wurde überraschend gefunden, dass noch höhere Bindungswerte mit grösserer Unempfindlichkeit gegen extreme Temperatureinwirkungen und andere einsatzbedingte Einflussgrössen möglich sind, wenn die Elastomermischung Kieselsäure enthält. Es empfiehlt sich dabei, den Kieselsäureanteil nicht unter 10% des Elastomer-Anteils der Mischung zu wählen, zweckmässig in einer Grössenordnung zwischen 20 und 80% des Elastomer-Anteiles.

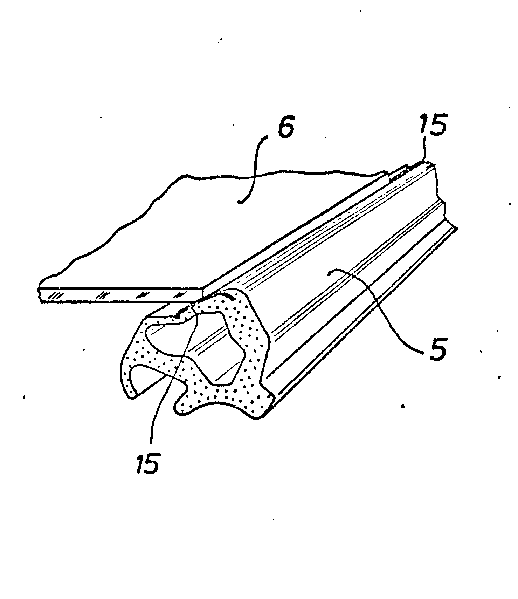

In der Zeichnung ist ein Teilstück eines Zweistoff-Dichtungsprofilstranges mit der ebenfalls nur als Teilstück angedeuteten Scheibe eines Schiebefensters in perspektivischer Ansicht schematisch dargestellt.

Der Profilstrang 5 ist mit der gezeichneten Querschnittsform vorteilhaft durch Strangpressen aus einem witterungsbeständigen Gummi hergestellt und in dem mit der Fensterscheibe 6 in gleitende Berührung tretenden äusseren Umfangsabschnitt mit einem festhaftend aufgebrachten Belagstreifen 15 versehen. Der vorzugsweise aus einer Folie eines Fluor enthaltenden thermoplastischen Kunststoffes, Polytetrafluoräthylen od.dgl. geschnittene Belagstreifen bildet an dem Profilstrang 5 eine Oberflächenzone erhöhter Gleitfähigkeit und setzt infolgedessen die Bewegungswiderstände der Scheibe 6 erheblich herab.

Der Profilstrang 5 selbst besteht z.B. aus einem Äthylen-Propylen-Terpolymer (EPDM) mit einem die Haftung des Belagstreifens 15 besonders begünstigenden Zusatz an Kieselsäure in einem Anteilverhältnis zwischen 20 und 80% des EPDM-Anteiles in der Gesamtmischung.

## Patentansprüche

1. Aus einer Mischung eines kautschukartigen Elastomeren mit in Teilbereichen seines Querschnittsumfanges in haftender Verbindung aufgebrachten und über seine ganze Länge durchlaufenden Belagstreifen (15) aus andersartigen Stoffen, insbesondere aus fluorhaltigen Kunststoffen wie z.B. Polytetrafluoräthylen, hergestellter Profilstrang (5) zum dichtenden Einfassen von Fenster- oder Türöffnungen in Kraftfahrzeugen und Gebäuden, dadurch gekennzeichnet, dass die Elastomermischung Kieselsäure enthält.

2. Profilstrang nach Anspruch 1, dadurch gekennzeichnet, dass die Elastomermischung einen Kieselsäureanteil in einer Grössenordnung von mindestens 10% ihres Elastomer-Anteiles aufweist.

3. Profilstrang nach Anspruch 2, dadurch gekennzeichnet, dass der Kieselsäureanteil sich in einer Grössenordnung zwischen 20 und 80% des Elastomer-Anteiles bewegt.

## Revendications

1. Profilé (5) fabriqué en un mélange d'un élastomère du type du caoutchouc, comportant des bandes de revêtement (15) faites de matières d'un autre type, en particulier de matières synthétiques fluorées comme, par exemple, le polytétrafluoréthylène, qui sont fixées sur des régions partielles du périmètre de sa section par une liaison par adhérence, et qui s'étendent sur toute sa longueur, ce profilé étant destiné à encadrer à joint étanche des baies de fenêtres ou de portes dans des véhicules automobiles ou dans des bâtiments, caractérisé en ce que le mélange d'élastomère contient de l'acide silicique.

2. Profilé selon la revendication 1, caractérisé en ce que le mélange d'élastomère comprend une proportion d'acide silicique de l'ordre de grandeur d'au moins 10% de la proportion d'élastomère.

3. Profilé selon la revendication 2, caractérisé en ce que la proportion d'acide silicique est comprise dans l'intervalle d'ordre de grandeur allant de 20% à 80% de la proportion d'élastomère.

## Claims

1. Extruded profile (5) for sealingly bordering window or door openings in motor vehicles and buildings, which profile is formed from a mixture of a rubber-like elastomer with cover strips (15) formed from different substances, more especially formed from plastics materials containing fluorine, such as polytetrafluoroethylene, for example, which strips are mounted in partial regions of the cross-sectional periphery of the profile so as to be adhesively connected thereto, and they extend over the entire length of the profile, characterised in that the elastomeric mixture contains silicic acid.

2. Extruded profile according to claim 1, characterised in that the elastomeric mixture has a silicic acid content of an order of magnitude of at least 10% of its elastomeric content.

3. Extruded profile according to claim 2, characterised in that the silicic acid content varies in an order of magnitude of between 20 and 80% of the elastomeric content.

1/i